(19)

Europäisches
Patentamt

European
Patent Office

Office européen
des brevets

(11) **EP 3 412 633 A1**

(12) **EUROPEAN PATENT APPLICATION**

(43) Date of publication:
**12.12.2018 Bulletin 2018/50**

(51) Int Cl.:
***C01G 53/00*** *(2006.01)*

(21) Application number: **17175010.2**

(22) Date of filing: **08.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **BASF SE**
**67056 Ludwigshafen am Rhein (DE)**

(72) Inventors:
• **TER MAAT Johan**
 **67056 Ludwigshafen (DE)**
• **WOLF Hanne**
 **67056 Ludwigshafen (DE)**

(74) Representative: **BASF IP Association**
 **BASF SE**
 **G-FLP-C006**
 **67056 Ludwigshafen (DE)**

(54) **PROCESS FOR MANUFACTURING AN ELECTRODE ACTIVE MATERIAL**

(57) Process for making an electrode active material for a lithium ion battery, said process comprising the following steps:

(d) providing a precursor of a mixed oxide according to general formula $Li_{1+x}TM_{1-x}O_2$, wherein TM is a combination of two or more transition metals selected from Mn, Co and Ni, optionally in combination with at least one more metal selected from Ba, Al, Ti, Zr, W, Fe, Cr, Mo, Nb, Mg and V, and x is in the range of from zero to 0.2, said precursor being selected from mixed hydroxides, carbonates, oxyhydroxides and oxides of TM,

(e) mixing said precursor with at least one lithium compound selected from LiOH, $Li_2O$ and $Li_2CO_3$,

(f) Subjecting the mixture of said precursor and lithium compound to microwave treatment at a temperature in the range of from 200 to 1000°C in the presence of a microwave absorbing ceramic material in the form of a grid or a particulate material.

**EP 3 412 633 A1**

**EP 3 412 633 A1**

**Description**

The present invention is directed towards a process for making an electrode active material for a lithium ion battery, said process comprising the following steps:

(a) providing a precursor of a mixed oxide according to general formula $Li_{1+x}TM_{1-x}O_2$, wherein TM is a combination of two or more transition metals selected from Mn, Co and Ni, optionally in combination with at least one more metal selected from Ba, Al, Ti, Zr, W, Fe, Cr, Mo, Nb, Mg and V, and x is in the range of from zero to 0.2, said precursor being selected from mixed hydroxides, carbonates, oxyhydroxides and oxides of TM,
(b) mixing said precursor with at least one lithium compound selected from LiOH, $Li_2O$ and $Li_2CO_3$,
(c) Subjecting the mixture of said precursor and lithium compound to microwave treatment at a temperature in the range of from 200 to 1000°C in the presence of a microwave absorbing ceramic material in the form of a grid or a particulate material.

Lithiated transition metal oxides are currently being used as electrode active materials for lithium-ion batteries. Extensive research and developmental work has been performed in the past years to improve properties like charge density, specific energy, but also other properties like the reduced cycle life and capacity loss that may adversely affect the lifetime or applicability of a lithium-ion battery. Additional effort has been made to improve manufacturing methods.

In a typical process for making cathode materials for lithium-ion batteries, first a so-called precursor is being formed by co-precipitating the transition metals as carbonates, oxides or preferably as hydroxides that may or may not be basic. The precursor is then mixed with a lithium salt such as, but not limited to LiOH, $Li_2O$ or - especially - $Li_2CO_3$ - and calcined (fired) at high temperatures. Lithium salt(s) can be employed as hydrate(s) or in dehydrated form. The calcination - or firing - generally also referred to as thermal treatment or heat treatment of the precursor - is usually carried out at temperatures in the range of from 600 to 1,000 °C. During the thermal treatment a solid state reaction takes place, and the electrode active material is formed. In cases hydroxides or carbonates are used as precursors the solid state reaction follows a removal of water or carbon dioxide. The thermal treatment is performed in the heating zone of an oven or kiln.

The heat treatment is usually consuming a lot of energy. Due to the high energy consumption - for example electricity consumption - alternative means of heating have been evaluated. In US 6,699,456, microwave heating has been suggested.

Microwave heating is a technology which can be used for drying in many industrial processes. The microwave radiation penetrates the treated material and generates heat in situ with the absorption of radiation by polar water molecules. However, microwave heating of precursor mixtures must be deemed to be a difficult task. The precursors of electrode active materials have properties of inorganic insulators, having poor coupling with microwaves. In the course of the process, several decomposition reactions take place that transform the original hydroxides and/or carbonates and/or oxyhydroxides into oxides, followed by intercalation of Li, leading to a fairly good electronic and ionic conducting material that will be almost opaque for microwaves. In other words, in the course of the calcination process a fairly transparent material transforms in several quite abrupt steps into a fairly opaque material. This poses real challenges for temperature control and makes the prospects of microwave heating of the material itself unattractive.

Another problem in heat treatment of a precursor is the temperature gradient inside the precursor bed. Said temperature gradient may lead to inhomogenities in electrode active materials.

It was therefore an objective of the present invention to provide an efficient process for making electrode active materials for lithium ion batteries that lead to a more efficient energy use and that avoids the formation of inhomogenities.

Accordingly, the process defined at the outset has been found, hereinafter also referred to as inventive process or process according to the (present) invention.

The inventive process comprises the following steps, hereinafter also referred to as steps (a) and (b) and (c):

(a) providing a precursor of a mixed oxide according to general formula $Li_{1+x}TM_{1-x}O_2$, wherein TM is a combination of two or more transition metals selected from Mn, Co and Ni, optionally in combination with at least one more metal selected from Ba, Al, Ti, Zr, W, Fe, Cr, Mo, Nb, Mg and V, and x is in the range of from zero to 0.2, said precursor being selected from mixed hydroxides, carbonates, oxyhydroxides and oxides of TM,
(b) mixing said precursor with at least one lithium compound selected from LiOH, $Li_2O$ and $Li_2CO_3$,
(c) Subjecting the mixture of said precursor and lithium compound to microwave treatment at a temperature in the range of from 200 to 1000°C in the presence of a microwave absorbing ceramic material in the form of a grid or a particulate material.

Steps (a) to (c) will be described in more detail below.
The inventive process refers to a process of making a mixed oxide according to general formula $Li_{1+x}TM_{1-x}O_2$

wherein TM is a combination of two or more transition metals selected from Mn, Co and Ni, optionally in combination with at least one more metal selected from Ba, Al, Ti, Zr, W, Fe, Cr, Mo, Nb, Mg, and V,

and x is in the range of from zero to 0.2, preferably 0.001 to 0.1 and even more preferably from 0.002 to 0.05.

TM may be selected from combinations of Mn and Co, or Mn and Ni, and Ni and Co, and from combinations of Ni, Mn and Co, optionally in each case at least one more metal selected from Ba, Al, Ti, Zr, W, Fe, Cr, Mo, Nb, Mg, and V, preferably at least one of Al, W, Ti and Zr. Preferred are combinations of Ni and Co and of Ni and Co and Mn" optionally in each case at least one more metal selected from Al, W, Ti and Zr.

In a preferred embodiment, TM is a combination of metals according to general formula (I)

$$(Ni_aCo_bMnc)_{1-d}M_d \qquad (I)$$

with

a being in the range of from 0.3 to 0.95, preferably 0.6 to 0.9, and even more preferably 0.6 to 0.85,
b being in the range of from 0.05 to 0.4, preferably 0.05 to 0.2,
c being in the range of from zero to 0.6, preferably zero to 0.2, and
d being in the range of from zero to 0.1, preferably 0.001 to 0.005, and

$$a + b + c = 1.$$

M is selected from Ba, Al, Ti, Zr, W, Fe, Cr, Mo, Nb, Mg, and V, including combinations of at least two of the foregoing, preferably M is selected from Al, W, Ti and Zr and combinations of at least two of the foregoing, and even more preferably from Al, Ti and Zr.

Examples of combinations of metals according to general formula (I) are selected from $Ni_{0.33}Co_{0.33}Mn_{0.33}$, $Ni_{0.4}Co_{0.2}Mn_{0.4}$, $Ni_{0.5}Co_{0.2}Mn_{0.3}$, $Ni_{0.6}Co_{0.2}Mn_{0.2}$, $(Ni_{0.85}Co_{0.15})_{0.98}Al_{0.02}$, $(Ni_{0.85}Co_{0.15})_{0.97}Al_{0.03}$, $(Ni_{0.85}Co_{0.15})_{0.95}Al_{0.05}$, $Ni_{0.8}Co_{0.1}Mn_{0.1}$, and $Ni_{0.7}Co_{0.2}Mn_{0.1}$. Further examples are $(Ni_{0.6}Co_{0.2}Mn_{0.2})_{0.997}Al_{0.003}$, $(Ni_{0.6}Co_{0.2}Mn_{0.2})_{0.998}Al_{0.002}$, $(Ni_{0.7}Co_{0.2}Mn_{0.1})_{0.997}Al_{0.003}$, $(Ni_{0.7}Co_{0.2}Mn_{0.1})_{0.998}Al_{0.002}$, $(Ni_{0.8}Co_{0.1}Mn_{0.1})_{0.997}Al_{0.003}$, $(Ni_{0.8}Co_{0.1}Mn_{0.1})_{0.998}Al_{0.002}$.

Said TM may contain traces of metal ions, for example traces of ubiquitous metals such as sodium, calcium or zinc, as impurities but such traces will not be taken into account in the description of the present invention. Traces in this context will mean amounts of 0.05 mol-% or less, referring to the total metal content of TM.

It is possible to synthesize the desired electrode active material from a lithium compound (B) and a mixture of oxides or hydroxides or carbonates of TM. However, it is preferred to synthesize said mixed oxide from a mixture of at least one lithium compound (B) and a mixed carbonate, mixed oxide, mixed hydroxide or mixed oxyhydroxide of TM. Mixed oxide, mixed hydroxide and mixed oxyhydroxide of TM are even more preferred as precursor.

Precursors may be selected from mixtures of metal oxides, mixed metal carbonates or - preferably - from mixed metal hydroxides or - more preferably - mixed metal oxyhydroxides.

In one embodiment of the present invention, the mean particle diameter (D50) of said precursor is in the range of from 6 to 12 $\mu$m, preferably 7 to 10 $\mu$m. The mean particle diameter (D50) in the context of the present invention refers to the median of the volume-based particle diameter, as can be determined, for example, by light scattering.

The particle shape of the secondary particles of the precursor is preferably spheroidal, that are particles that have a spherical shape. Spherical spheroidal shall include not just those which are exactly spherical but also those particles in which the maximum and minimum diameter of at least 90% (number average) of a representative sample differ by not more than 10%.

In one embodiment of the present invention, the precursor is comprised of secondary particles that are agglomerates of primary particles. Preferably, the precursor is comprised of spherical secondary particles that are agglomerates of primary particles. Even more preferably, the precursors comprised of spherical secondary particles that are agglomerates of spherical primary particles or platelets.

In one embodiment of the present invention, said precursor has the same composition of TM as the desired electrode active material.

In another embodiment of the present invention, said precursor has a different composition of TM. For example, the ratio of the two or more transition metals selected from Mn, Co and Ni is the same as in the desired electrode active material but element M is missing.

In embodiments wherein TM in the precursor is the same as in the desired electrode active material, the molar ratio of TM in the precursor to lithium in the lithium compound is selected approximately in the desired range of the desired compound, for example in the range of 1 : (1+x).

The precursor is preferably provided as powder.

In step (b) of the inventive process, the precursor provided in step (a) is mixed with at least one lithium compound. Said lithium compound is selected from $Li_2O$, $LiOH$, and $Li_2CO_3$, each as such or as hydrate, for example $LiOH \cdot H_2O$. Combinations of two or more of said lithium compounds are feasible as well.

Examples of suitable apparatuses for mixing precursor and lithium compound are tumbler mixers, plough-share mixers and free fall mixers.

In step (c), the mixture of said precursor and lithium compound is subjected to microwave treatment, hereinafter also referred to as calcination (c). Step (c) is performed in the presence of a microwave absorbing ceramic material in the form of a grid or a particulate material. Examples of microwave absorbing ceramics are oxidic and non-oxidic ceramics. Preferred examples of microwave absorbing ceramics are carbon, graphite, zirconia, $\beta$-$Al_2O_3$ and SiC. Most preferred is SiC. Silicon carbide is available in many different grades, e.g. sintered, oxide-bonded, nitride-bonded or silicon-infiltrated SiC. There is no particular preference for the grade of SiC, the ultimate choice being a compromise between cost, corrosion resistance and resistance to thermal fatigue

Microwaves in the context of the present invention may have a frequency in the range of from 0.5 to 40 GHz, preferred are 1 to 10 GHz.

In embodiments wherein microwave absorbing ceramic materials are in the shape of a particulate material it is preferred that such particulate material has a spheroidal shape but a diameter significantly larger than the particle diameter of the precursor. For example, the minimum diameter may be 50 $\mu$m, preferably 100 $\mu$m and even more preferably 500 $\mu$m. A suitable maximum diameter is 5 mm. The use of significantly larger particles carries the risk of local hot spots.

In other embodiments, microwave absorbing ceramic materials in the shape of a particulate material may have a prismatic shape, cube-like shape or be in the form of flakes. It is preferred, though, that in embodiments with non-spheroidal microwave absorbing ceramic materials the diameter of at least one dimension is significantly higher than the particle diameter of the precursor.

In one embodiment of the present invention, at least 1 % by weight, preferably at least 5 % by weight and even more preferably at least 10% by weight of microwave absorbing ceramic material are in the shape of a particulate material are present during step (c), referring to the precursor. The reference is with respect to the precursor at the beginning of step (c). A preferred maximum amount of microwave absorbing ceramic material in the shape of a particulate material is 20% by weight, referring to the precursor at the beginning of step (c).

Microwave absorbing ceramic materials that are in the shape of a particulate material may be introduced before, during or after step (b).

After the microwave treatment, the particulate material can be easily removed, for example by sieving or combinations of crushing and sieving of the reaction product. The bigger the difference in particle diameter between electrode active material made according to the present invention and the particulate material from microwave absorbing ceramic, the easier is the removal of the latter.

In embodiments wherein the microwave absorbing material is in the form of a grid, such grid is preferably combined with precursor in a saggar. Then, the grid has overall dimensions that are smaller than the saggar. The thickness of the walls may be in the range of 0.2 to 2 mm, preferably 0.3 to 1 mm and even more preferably 0.4 to 0.5 mm. The grid can be composed of individual intersecting strips of ceramic or in the form of an extruded honeycomb and is inserted into the precursor powder bed inside the saggar.

In one embodiment of the present invention, the overall height of the grid is in the order of magnitude of a bed of precursor in a saggar. The exposed section of the grid above the precursor powder bed should be preferably above 1 cm, more preferably above 5 cm. Preferably, the grid is a square-shaped grid. Useful dimensions of a square-shaped grid are edges of from 1 to 10 cm, preferably 2 to 5 cm and heights in the range from 2 to 15 cm, preferably 5 to 15 cm.

The size of the grid is determined by the inner dimensions of the saggar, which is usually a square with size 20 - 50, preferably 30 - 35 cm

Step (c) of the inventive process may be performed in a furnace, for example in a rotary tube furnace, in a muffle furnace, in a pendulum furnace, in a roller hearth furnace or in a push-through furnace. Combinations of two or more of the aforementioned furnaces are possible as well.

A preferred embodiment of the present invention may be the use of microwave heating to preheat saggar and the ceramic microwave absorbing material at a rate of 10 to 150 K/min, to a temperature closely below an isothermal hold time in the calcination process. Such a heating rate is well above heating rates of 1 to 8 K/min which is allowed by conventional furnaces and conventional saggar materials.

Step (c) of the inventive process can be performed over a period of 10 minutes to 24 hours, preferably 20 minutes to 6 hours. Step (c) can be effected at a temperature level, or a temperature profile can be run.

In one embodiment of the present invention, step (c) is performed in an oxygen-containing atmosphere. Oxygen-containing atmosphere includes an atmosphere of air, of pure oxygen, of mixtures from oxygen with air, and of air diluted with an inert gas such as nitrogen. In step (c), preferred is an atmosphere of oxygen or oxygen diluted with air or nitrogen and a minimum content of oxygen of 21 vol.-%.

In one embodiment of the present invention, between steps (b) and (c) at least one pre-calcining step (c*) is being performed. Step (c*) comprises heating the mixture obtained in step (b) at a temperature in the range of from 200 to 750°C for a period of 2 to 24 hours, and performing step (c) with the material obtained in step(s) (c*).

In one embodiment of the present invention, two pre-calcining steps are being performed between steps (b) and (c). Said two pre-calcining steps include heating the mixture obtained in step (b) at a temperature in the range of from 200 to 400°C for a period of 2 to 12 hours, followed by heating the material so obtained at a temperature in the range of from 500 to 750°C for a period of 2 to 12 hours.

At the beginning of step (c), a heating rate of 1 K/min up to 150 K/min may be applied, in embodiments wherein a mixed oxide precursor is used, a preferred heating rate is in the range of from 50 to 150 K/min. In embodiments wherein mixed hydroxide precursors or mixed carbonate precursor is used, heating rates of 1 to 50 K/min are preferred and heating rates of 5 to 25 K/min are more preferred.

The invention is further illustrated by the following examples.

I. Synthesis of a precursor TM-OH

A 9-I-stirred reactor with overflow for removing mother liquor is filled with distilled water and 36.7 g of ammonium sulfate per kg of water. The solution is heated to 45°C and the pH value is adjusted to 11.6 by adding an aqueous 25 wt. % of sodium hydroxide solution.

The precipitation reaction is started by the simultaneous feed of an aqueous transition metal solution and an alkaline precipitation agent at a flow rate ratio of 1.84, and a total flow rate resulting in a residence time of 5 hours. The transition metal solution contains the sulfates of Ni, Co and Mn at a molar ratio of 1:1:1 and a total transition metal concentration of 1.65 mol/kg. The alkaline precipitation agent consisted of 25 wt. % sodium hydroxide solution and 25 wt. % ammonia solution in a weight ratio of 8.29. The pH value is kept at 11.6 by the separate feed of 25 wt. % sodium hydroxide solution. Precursor TM-OH.1 is obtained by filtration of the resulting suspension, washed with distilled water, drying at 120°C in air over a period of 12 hours and sieving.

II. Synthesis of Cathode Active Materials

II.1 Comparative Example 1: Conventional heating

Precursor TM.OH is mixed with $Li_2CO_3$ so that the ratio of Li to metals other than lithium is 1.05 to 1. The mixture so obtained is then placed into a saggar made from mullite and calcined in a muffle type furnace under the following conditions:

Heating Rate: 3 K/Min
300°C 6 hours, 600 °C 6 hours, 920 °C 6 hours.

After the calcination program the material so obtained is cooled, deagglomerated in an agate mortar and sieved through a sieve with 32 $\mu$m mesh size.

Cathode active material CAM.1 is obtained. If the calcination time is significantly shorter than in the above example, formation of an inhomogeneous material is observed.

11.2 Comparative Example 2: Microwave heating without beads or grid

Precursor TM.OH is mixed with $Li_2CO_3$ so that the ratio of Li to metals other than lithium is 1.05 to 1. The obtained mixture is pre-calcined in a muffle furnace:

Heating rate: 3 K/min
300°C 6 hours, 750 °C 4 hours.

The obtained pre-calcined material is placed into a 150 ml Nanoshel crucible made from SiC, closed with a SiC lid. The crucible is thermally insulated with alumina fiber blanket and placed into a Panasonic 800 W microwave oven using 2.45 GHz frequency with continuous power control. Temperature is monitored with an infrared pyrometer focused on the lid surface. The full power of the microwave oven is applied:

Heating Rate at 800 W: 75 K/Min
Calcination at 920 °C for 90 min.

After the calcination program the material so obtained is cooled, deagglomerated in an agate mortar and sieved through a sieve with 32 μm mesh size.

Cathode active material CAM.2 is obtained. Homogeneity is excellent.

Microwave heating of a SiC saggar allows a shorter calcination time compared to conventional heating. An even shorter calcination time at 920 °C, however, leads to a less homogeneous product.

II.3 (inventive) Calcination in the presence of a SiC grid

Precursor TM.OH is mixed with $Li_2CO_3$ so that the ratio of Li to metals other than lithium is 1.05 to 1. The obtained mixture is pre-calcined in a muffle furnace:

> Heating rate: 3 K/min
> 300°C 6 hours, 750 °C 4 hours.

The obtained pre-calcined material is placed into a 150 ml Nanoshel crucible made from SiC, closed with a ceramic lid made from high purity aluminum oxide. $Al_2O_3$ is transparent for microwaves.

In addition, a grid made from SiC plates was placed in the powder bed with wall thickness 1 mm and grid square size 1 cm. The crucible is thermally insulated with alumina fiber blanket and placed into a Panasonic 800 W microwave oven using 2.45 GHz frequency with power control. Temperature is monitored with an infrared pyrometer focused on the alumina lid surface. The full power of the microwave oven is applied:

> Heating Rate at 800 W: 75 K/Min
> Calcination at 920 °C for 30 min

After the calcination program the material so obtained is cooled, the grid removed and the resultant powder deagglomerated in an agate mortar and sieved through a sieve with 32 μm mesh size.

Cathode active material CAM.3 is obtained. Homogeneity is excellent. With respect to CAM.2 a reduction in calcination time was achieved with the use of a grid.

II.4 (inventive) Calcination in the presence of SiC beads

Precursor TM.OH is mixed with $Li_2CO_3$ so that the ratio of Li to metals other than lithium is 1.05 to 1.

An amount of 25 g of SiC beads, diameter 1 mm, are added to 125 g of the above mixture of TM.OH and $Li_2CO_3$. The resultant mixture is then placed into a 150 ml Nanoshel crucible made from SiC, closed with a lid made from high purity aluminium oxide. Al2O3 is transparent for microwaves.

The crucible is thermally insulated with alumina fiber blanket and placed into a Panasonic 800 W microwave oven using 2.45 GHz frequency with continuous power control. Temperature is monitored with an infrared pyrometer focused on the alumina lid surface. The heating rate is reduced by employing a stepwise increase of microwave power in 160 W steps to 800 W maximum power and waiting 5 mins on each power level. At full power, the mixture spills over the crucible rim due to the large volume of gas evolving from the mixture.

> Heating Rate: 25 K/Min
> Calcination at 920 °C for 30 min

After the calcination program the material so obtained is cooled, deagglomerated in an agate mortar and sieved through a sieve with 32 μm mesh size. The SiC beads remain on the sieve.

Cathode active material CAM.4 is obtained. Homogeneity is excellent. With respect to conventional heating, leading to CAM.1, a significant increase in heating rate can be employed. In addition, the calcination time can be reduced.

**Claims**

1. Process for making an electrode active material for a lithium ion battery, said process comprising the following steps:

   (a) providing a precursor of a mixed oxide according to general formula $Li_{1+x}TM_{1-x}O_2$, wherein TM is a combination of two or more transition metals selected from Mn, Co and Ni, optionally in combination with at least one more metal selected from Ba, Al, Ti, Zr, W, Fe, Cr, Mo, Nb, Mg and V, and x is in the range of from zero to 0.2, said precursor being selected from mixed hydroxides, carbonates, oxyhydroxides and oxides of TM,

(b) mixing said precursor with at least one lithium compound selected from LiOH, $Li_2O$ and $Li_2CO_3$,

(c) Subjecting the mixture of said precursor and lithium compound to microwave treatment at a temperature in the range of from 200 to 1000°C in the presence of a microwave absorbing ceramic material in the form of a grid or a particulate material.

2.  Process according to claim 1 wherein TM is a combination of transition metals according to general formula (I)

$$Ni_aCo_bMn_cM_d \qquad (I)$$

with

a being in the range of from 0.3 to 0.95,
b being in the range of from 0.05 to 0.4,
c being in the range of from zero to 0.6, and
d being in the range of from zero to 0.1,

M selected from Ba, Al, Ti, Zr, W, Fe, Cr, Mo, Nb, Mg and V, and

$$a + b + c + d = 1.$$

3.  Process according to claim 1 or 2 wherein said particulate microwave absorbing ceramic material is selected from amorphous carbon, graphite, zirconia, $\beta$-$Al_2O_3$ and SiC.

4.  Process according to any of the preceding claims wherein said lithium salt is selected from lithium hydroxide and lithium carbonate.

5.  Process according to any of the preceding claims wherein TM is a combination of transition metals selected from Ni and at least one of Mn and Co, wherein TM is a combination according to formula (II)

$$Ni_aCo_bMn_cM_d \qquad (II)$$

with

a being in the range of from 0.6 to 0.9,
b being in the range of from 0.05 to 0.2,
c being in the range of from zero to 0.2, and
d being in the range of from zero to 0.1,

M being selected from Al, Ti and Zr, and

$$a + b + c + d = 1.$$

6.  Process according to any of the preceding claims wherein particulate ceramic material has an average particle diameter (D50) in the range of from 50 $\mu$m to 5 mm.

7.  Process according to any of the preceding claims wherein the amount of particulate ceramic material in step (c) is in the range of from 1 to 20 % by weight, referring to the precursor.

8.  Process according to any of the preceding steps wherein step (c) is performed under a forced flow of gas.

9.  Process according to any of the preceding claims wherein steps (c) is performed in a roller hearth kiln, a pusher kiln or a rotary kiln.

10. Process according to any of the preceding claims wherein step (c) is performed in a tubular reactor.

**11.** Process according to any of the preceding claims wherein such grid has the following dimensions: wall thickness of the grid in the range of from 0.5 to 2 mm and distance between grid intersections in the range of from 5 to 50 mm.

Europäisches
Patentamt
European
Patent Office
Office européen
des brevets

## EUROPEAN SEARCH REPORT

Application Number

EP 17 17 5010

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 97/43794 A1 (CHINESE ACAD PHYSICS INST [CN]; YAN HONGWEI [CN]; HUANG XUEJIE [CN]; C) 20 November 1997 (1997-11-20)<br>* page 2, paragraph [0007] - paragraph [0008] *<br>* examples 1-8 * | 1-11 | INV.<br>C01G53/00 |
| A | US 2009/114527 A1 (HWANG BING-JOE [TW] ET AL) 7 May 2009 (2009-05-07)<br>* page 1, column 2, paragraph [0014] - paragraph [0021] *<br>* page 2, column 1, paragraph [0026] - column 2, paragraph [0039] * | 1-11 | |
| A | WO 2016/070205 A2 (CSIR [ZA]) 6 May 2016 (2016-05-06)<br>* page 9, paragraph 1 *<br>* page 12, line 23 - page 13, line 17 * | 1-11 | |
| A | US 7 132 381 B1 (OH YOUNG JEI [KR] ET AL) 7 November 2006 (2006-11-07)<br>* column 1, line 29 - column 2, line 40 * | 1-11 | TECHNICAL FIELDS SEARCHED (IPC)<br><br>C01G |

The present search report has been drawn up for all claims

| Place of search | Date of completion of the search | Examiner |
|---|---|---|
| Munich | 16 November 2017 | Timmermans, Michel |

EPO FORM 1503 03.82 (P04C01)

## ANNEX TO THE EUROPEAN SEARCH REPORT
## ON EUROPEAN PATENT APPLICATION NO.

EP 17 17 5010

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2017

| Patent document cited in search report | | Publication date | Patent family member(s) | | Publication date |
|---|---|---|---|---|---|
| WO 9743794 | A1 | 20-11-1997 | CN | 1143267 A | 19-02-1997 |
| | | | DE | 913876 T1 | 19-08-1999 |
| | | | EP | 0913876 A1 | 06-05-1999 |
| | | | JP | H11511290 A | 28-09-1999 |
| | | | WO | 9743794 A1 | 20-11-1997 |
| US 2009114527 | A1 | 07-05-2009 | TW | 200921971 A | 16-05-2009 |
| | | | US | 2009114527 A1 | 07-05-2009 |
| WO 2016070205 | A2 | 06-05-2016 | AR | 102483 A1 | 01-03-2017 |
| | | | CA | 2966361 A1 | 06-05-2016 |
| | | | CN | 107108260 A | 29-08-2017 |
| | | | EP | 3212578 A2 | 06-09-2017 |
| | | | KR | 20170078791 A | 07-07-2017 |
| | | | WO | 2016070205 A2 | 06-05-2016 |
| US 7132381 | B1 | 07-11-2006 | JP | 2007051050 A | 01-03-2007 |
| | | | US | 7132381 B1 | 07-11-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6699456 B